# EUROPEAN PATENT APPLICATION

(11) **EP 2 960 460 A1**
(43) Date of publication of application: **30.12.2015**
(21) Application number: 13875521.0
(22) Date of filing: 21.02.2013
(51) Int. Cl.: F02B 37/24, F02B 39/00

(54) **VARIABLE GEOMETRY TURBOCHARGER**

(71) Applicant: Mitsubishi Heavy Industries, Ltd., Tokyo 108-8215 (JP)
(72) Inventor: IBARAKI, Seiichi, Tokyo 108-8215 (JP); SUZUKI, Hiroshi, Tokyo 108-8215 (JP); YOKOYAMA, Takao, Tokyo 108-8215 (JP)
(74) Representative: Hess, Peter K. G.
(86) International application number: PCT/JP2013/054402
(87) International publication number: WO 2014/128894

(57) **Abstract**

A variable geometry exhaust gas turbocharger comprises: a turbine rotor 26 including a rotating shaft 24 and a turbine wheel 12; a bearing housing 20 accommodating a bearing unit 22; a turbine housing 10 accommodating the turbine wheel rotatably and having formed an annular turbine scroll part 16 in which exhaust gas flows; and a variable geometry mechanism 40 provided in an annular nozzle part 18 to guide the exhaust gas flowing in the turbine scroll part into the turbine wheel; wherein the variable geometry mechanism 40 comprises: a nozzle vane 42 protruding, in a state of being unable to rotate, from at least one of a shroud side or a hub side of the nozzle part toward the nozzle part; an annular nozzle wall 44 configured to be movable forward and backward from the hub side toward the shroud side or from the shroud side toward the hub side of the nozzle part, and configured to permit a nozzle width B of the nozzle part to be variable over all circumference; and a driving part 46 for moving the nozzle wall forward and backward.

## Description

### TECHNICAL FIELD

The present invention relates to a variable geometry exhaust gas turbocharger.

### BACKGROUND

In exhaust turbochargers, a variable geometry mechanism to control flow of exhaust gas acting on the turbine wheel, which is disposed in a nozzle part between an turbine scroll part of an annular shape formed in a turbine housing and the turbine wheel rotatably provided in the center part of the turbine housing, is widely used.

Examples of such a variable geometry mechanism include a mechanism of a swing vane type where exhaust gas flow is controlled by rotating a movable vane disposed in the nozzle part, and a mechanism of a slide vane type where exhaust gas flow is controlled by moving forward and backward a nozzle wall on which a nozzle vane is fixed.

For example, Patent Document 1 discloses an example of a slide vane type variable geometry exhaust gas turbocharger.

### Citation List

### Patent Literature

Patent Document 1: JP 2008-133924A

### SUMMARY

### Technical Problem

The variable geometry mechanism such as a swing vane type or a slide vane type has a sliding part, and therefore has a particular problem such as wearing or fixation due to thermal deformation of the sliding part. There is also a problem such that if a gap for the sliding part is widened to solve such problem, performance of the turbine is likely to decline.

In this regard, the present inventors have considered it effective to simplify the structure of the sliding part as much as possible so as to be less susceptible to the thermal deformation of the sliding part.

At least one embodiment of the present invention has been made in view of the above problems and is to provide a variable geometry exhaust gas turbocharger comprising a variable geometry mechanism having a simplified structure of a sliding part.

### Solution to Problem

A variable geometry exhaust gas turbocharger according to at least one embodiment of the present invention comprises:
a turbine rotor including a rotating shaft and a turbine wheel fixed on an end part of the rotating shaft;
a bearing housing accommodating a bearing unit for rotatably supporting the rotating shaft;
a turbine housing accommodating the turbine wheel rotatably and having formed, around the turbine wheel, an turbine scroll part of an annular shape in which exhaust gas flows; and
a variable geometry mechanism provided in a nozzle part of an annular shape to guide the exhaust gas flowing in the turbine scroll part into the turbine wheel;
wherein the variable geometry mechanism comprises:
   a nozzle vane protruding, in a state of being unable to rotate, from at least one of a shroud side or a hub side of the nozzle part toward the nozzle part;
   a nozzle wall of an annular shape configured to be movable forward and backward from the hub side toward the shroud side or from the shroud side toward the hub side of the nozzle part, and configured to permit a nozzle width of the nozzle part to be variable over all circumference; and
   a driving part for moving the nozzle wall forward and backward.

According to the above variable geometry exhaust gas turbocharger, the nozzle vane is fixed in the nozzle part in a state where the nozzle vane is not rotatable, and only the nozzle wall is movable forward and backward. Accordingly, it is possible to simplify the structure of the sliding part as compared with a conventional variable geometry mechanism of a swing vane type or of a slide vane type.

In particular, in a conventional case where a nozzle vane itself is swung or slid, the driving mechanism is required to have a high actuation accuracy because the nozzle vane is a member of controlling directly the flow of exhaust gas. In contrast, according to the embodiment, the nozzle vane is fixed in the nozzle part, and only the nozzle wall is moved forward and backward, whereby it is possible to manage the actuation accuracy of the driving mechanism less strictly than the conventional type and thereby to reduce cost.

In some embodiments, the nozzle wall comprises: a flow guide wall part constituting at least a part of a hub-side flow guide wall defining the nozzle part together with a shroud-side flow guide wall of the turbine housing therebetween; an outer circumferential side wall part of an annular shape connected to an outer circumferential side of the flow guide wall part; and an inner circumferential side wall part of an annular shape connected to an inner circumferential side of the flow guide wall part, and wherein in the flow guide wall part, an opening through which the nozzle vane is insertable, is formed.

According to such embodiments, it is possible to obtain a simple structure of the nozzle wall comprising three annual wall parts: the flow guide wall part, the outer circumferential side wall part, and the inner circumferential side wall part.

In some embodiments, the nozzle vane protrudes from the shroud-side flow guide wall toward the nozzle part.

According to such embodiments, it is possible to shorten the length of the nozzle vane as compared to the case where the nozzle vane protrudes from the hub side where a recess portion is formed.

In some embodiments, in a shroud part of the turbine housing, a cooling passage for a cooling medium to flow is formed.

According to such embodiments, by allowing the cooling medium such as water, oil or air, to flow in the cooling passage, it is possible to cool the shroud-side flow guide wall or the nozzle vane protruding from the shroud-side flow guide wall.

In some embodiments, inside the nozzle vane, a cavity portion communicated with the cooling passage is formed.

According to such embodiments, it is possible to cool the nozzle vane more effectively.

In some embodiments, inside the nozzle vane, a through-hole is formed through the nozzle vane in an axial direction.

According to such embodiments, it is possible to cool the nozzle vane effectively by the flow of the cooling medium in the through-hole.

In some embodiments, in the shroud part of the turbine housing, a cooling medium discharging passage for permitting the through-hole of the nozzle vane and an exhaust gas outlet on a downstream side of the turbine wheel to be communicated with each other, is formed.

According to such embodiments, the cooling medium having flown in the through-hole is discharged via the cooling medium discharging passage to the exhaust gas outlet on a downstream side of the turbine wheel, whereby it is possible to continuously supply the cooling medium to the through-hole.

In some embodiments, the variable geometry exhaust gas turbocharger comprises a cooling medium introducing mechanism for introducing the cooling medium into an internal space of the nozzle wall surrounded by the flow guide part, the outer circumferential side wall part and the inner circumferential side wall part.

According to such embodiments, it is possible to introduce the cooling medium into the internal space of the nozzle wall from the cooling medium introducing mechanism, whereby it is possible to cool the nozzle wall effectively.

In some embodiments, the nozzle wall has a collar portion provided so as to project from a circumferential edge of the opening toward the internal space.

According to such embodiments, since the nozzle wall has a collar portion provided so as to project from a circumferential edge of the opening toward the internal space, fluid including e.g. the cooling medium introduced into the internal space is less likely to leak to the nozzle part, and it is thereby possible to suppress reduction in the turbine efficiency due to leakage of the cooling medium.

Further, in such embodiments where the above through-hole formed inside the nozzle vane is employed in combination, the cooling medium introduced into the internal space flows in the through-hole, whereby it is possible to cool the nozzle vane at the same time as the nozzle wall.

In some embodiments, the cooling medium introducing mechanism is configured to introduce, as the cooling medium, air flowing in a compressor housing of the variable geometry exhaust gas turbocharger.

According to such embodiments, it is possible to use, as the cooling medium, the air flowing in the compressor housing with a simple structure.

In some embodiments, the cooling medium introducing mechanism has a pressure control device for controlling a pressure of the air to be introduced into the internal space of the nozzle wall.

According to such embodiments, it is possible to control the pressure of the air to be introduced to the internal space of the nozzle wall. Accordingly, by controlling the pressure of the air to be introduced in accordance with the timing of moving the nozzle wall forward and downward, it is possible to reduce the driving power for the driving part for moving the nozzle wall forward and backward.

### Advantageous Effects

According to at least one embodiment of the present invention, the nozzle vane is fixed in the nozzle part in a state where the nozzle vane is not rotatable, and only the nozzle wall is movable forward and backward, whereby a variable geometry exhaust gas turbocharger comprising a variable geometry mechanism having a simplified structure of a sliding part, is provided.

### BRIEF DESCRIPTION OF DRAWINGS

Fig. 1 is a cross-sectional view of a variable geometry exhaust gas turbocharger according to an embodiment of the present invention.
Fig. 2 is a view illustrating a variable geometry mechanism according to an embodiment.
Fig. 3 is a view illustrating a variable geometry mechanism according to an embodiment.
Figs. 4A to 4C are views illustrating a nozzle wall according to an embodiment.
Fig. 5 is a view illustrating a driving part according to an embodiment.
Each of Fig. 6A and Fig. 6B is a view illustrating a cooling structure of a variable geometry mechanism according to an embodiment.
Fig. 7 is a view illustrating a cooling structure of a variable geometry mechanism according to an embodiment.
Fig. 8 is a view illustrating a nozzle wall according to an embodiment.
Fig. 9 is a view illustrating a cooling medium introducing mechanism according to an embodiment.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

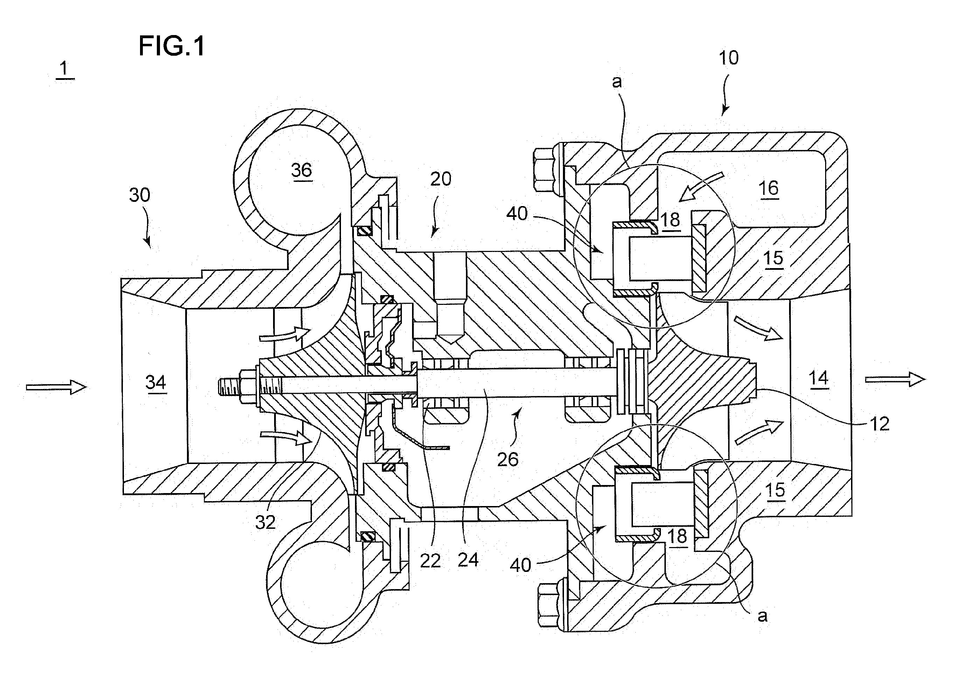

Fig. 1 is a cross-sectional view of a variable geometry exhaust gas turbocharger 1 according to an embodiment of the present invention. Firstly, with reference to Fig. 1, the variable geometry exhaust gas turbocharger 1 according to an embodiment of the present invention will be described.

As shown in Fig. 1, the variable geometry exhaust gas turbocharger 1 according to an embodiment of the present invention comprises: a turbine rotor 26 including a rotating shaft 24 and a turbine wheel 12 fixed on an end part of the rotating shaft 24; a bearing housing 20 accommodating a bearing unit 22 for rotatably supporting the rotating shaft 24; and a turbine housing 10 accommodating the turbine wheel 12 rotatably and having formed, around the turbine wheel 12, an turbine scroll part 16 of an annular shape in which exhaust gas flows. The turbine scroll part 16 is formed on the outer circumferential side of an annular shroud part 15 defining an exhaust gas outlet 14 and has an annular shape when the turbine housing 10 is looked at from the axial direction. A nozzle part 18 is formed between the turbine scroll part 16 and the turbine wheel 12 and has an annular shape when being looked at from the axial direction.

On the opposite side of the turbine housing 10 across the bearing housing 20, a compressor housing 30 for rotatably accommodating a compressor impeller 32 fixed on the other end part of the rotating shaft 24 is connected to the bearing housing 20.

High-temperature exhaust gas exhausted from an engine (not shown) flows in the turbine scroll part 16 of the turbine housing 10 and is guided to the turbine wheel 12 via the nozzle part 18, as indicated by the arrow in the figure. Then the exhaust gas does work on the turbine wheel 12 to rotate the turbine rotor 26 and then is discharged from the exhaust gas outlet 14 to the outside of the turbocharger 1.

On the other hand, in the compressor housing 30, the compressor impeller 32 rotates along with the rotation of the turbine rotor 26. And, as indicated by the arrow in the figure, air introduced from an intake air inlet 34 is compressed by the compressor impeller 32 and sent to an compressor scroll part 36. This compressed air is supplied to the engine.

Further, the variable geometry exhaust gas turbocharger 1 according to an embodiment of the present invention comprises, as shown in the part 'a' in the figure, a variable geometry mechanism 40 provided in the annular nozzle part 18 to guide the exhaust gas flowing in the turbine scroll part 16 to the turbine wheel 12.

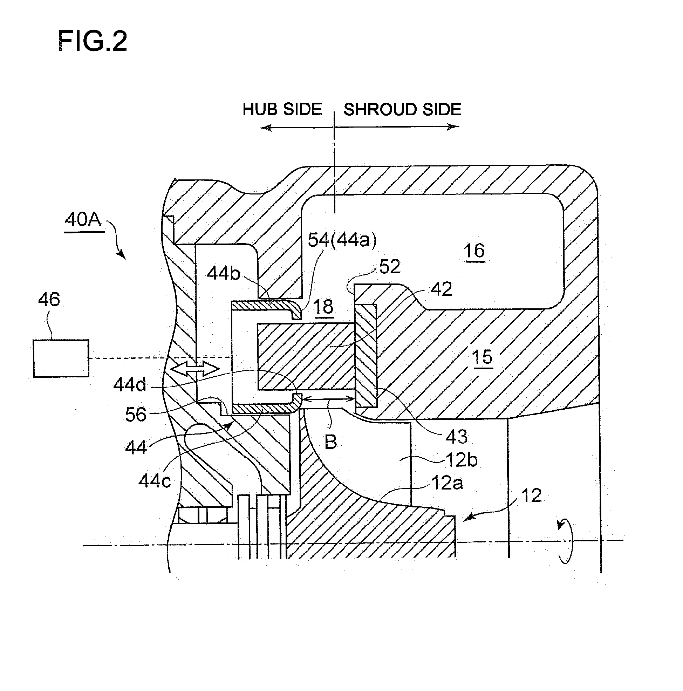

Now, specific configuration of the variable geometry mechanism 40 according to an embodiment of the present invention will be described with reference to Fig. 2 to Fig. 5.

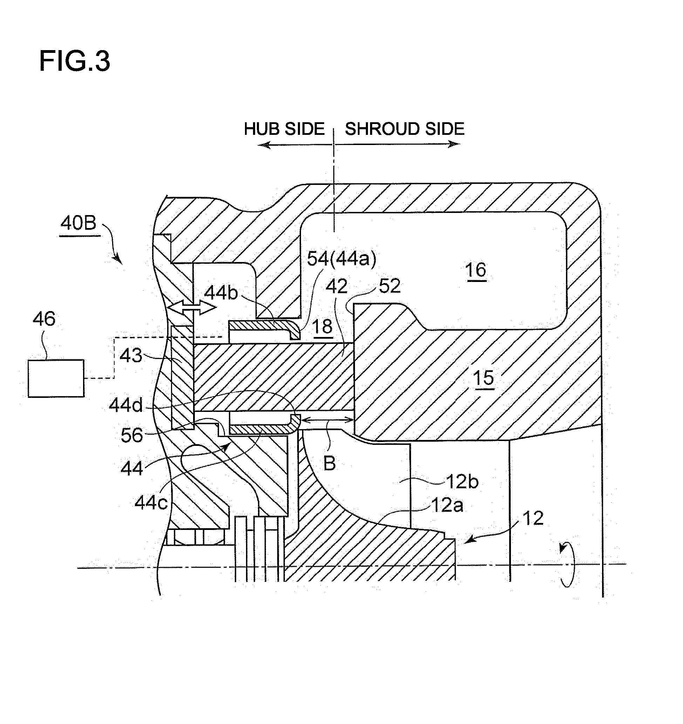

Fig. 2 is a view illustrating a variable geometry mechanism 40A according to an embodiment. Fig. 3 is a view illustrating a variable geometry mechanism 40B according to another embodiment.

As shown in Fig. 2 and Fig. 3, the variable geometry mechanism 40 according to an embodiment comprises: a nozzle vane 42 protruding, from at least one of a shroud side or a hub side of the nozzle part 18 toward the nozzle part 18; a nozzle wall 44 accommodated in a recess portion 56 formed on the hub side of the nozzle part 18 and configured to be movable forward and backward from the hub side toward the shroud side of the nozzle part 18; and a driving part for moving the nozzle wall 44 forward and backward.

The nozzle vane 42 has a base end part 43 fixed to the turbine housing 10 or the bearing housing 20 by welding or by a fastening means such as a bolt, and protrudes toward the nozzle part 18 in a state of being unable to rotate. Plurality of the nozzle vanes 42 are arranged with intervals in the circumferential direction.

In the variable geometry mechanism 40A shown in Fig. 2, the nozzle vane 42 protrudes from the shroud side toward the hub side. In the variable geometry mechanism 40B shown in Fig. 3, the nozzle vane 42 protrudes from the hub side to the shroud side of the nozzle part 18.

The nozzle wall 44 comprises: an annular flow guide wall part 44a constituting at least a part of a hub-side flow guide wall 54 defining the nozzle part 18 together with a shroud-side flow guide wall 52 of the turbine housing 10 between the hub-side flow guide wall 54 and the shroud-side flow guide wall 52; an annular outer circumferential side wall part 44b connected to an outer circumferential side of the flow guide wall part 44a; and an annular inner circumferential side wall part 44c connected to an inner circumferential side of the flow guide wall part 44a. In the flow guide wall part 44a, an opening 44d through which the nozzle vane 42 is insertable, is formed. In Fig. 2 and Fig. 3, the part with reference number 12a is a hub of the turbine wheel, and the part with reference number 12b is a rotor blade mounted on the hub 12a.

In the embodiments as shown in Fig. 2 and Fig. 3, the moving direction of the nozzle wall 44 is from the hub side to the shroud side; however, the present invention is not limited thereto. The moving direction of the nozzle wall 44 may be from the shroud side to the hub side.

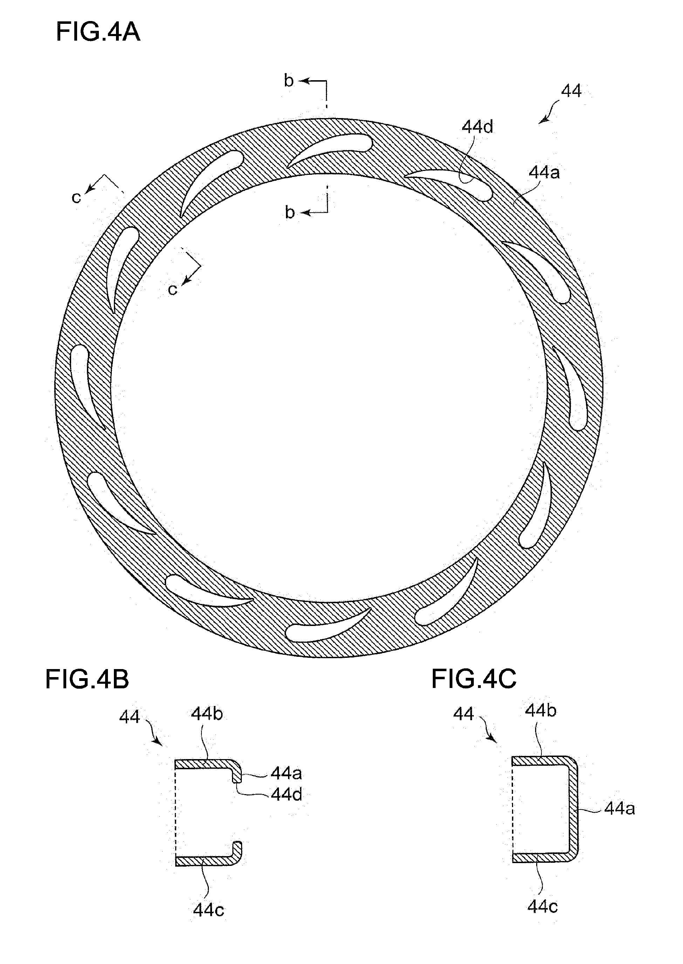

Figs. 4A to 4C are views illustrating a nozzle wall 44: Fig. 4A is a plan view, Fig 4B is a b-b cross-sectional view, and Fig. 4C is a c-c cross-sectional view.

As shown in Figs. 4A to 4C, the openings 44d are formed with intervals in the circumferential direction corresponding to the arrangement of the nozzle vanes 42, and in the area where the nozzle vanes 42 are not placed, no openings 44d are formed in the flow guide wall part 44a. The opening 44d has a shape homothetic to the shape of a cross section of the nozzle vane 42 so that the gap between the opening 44d and the nozzle vane 42 becomes small.

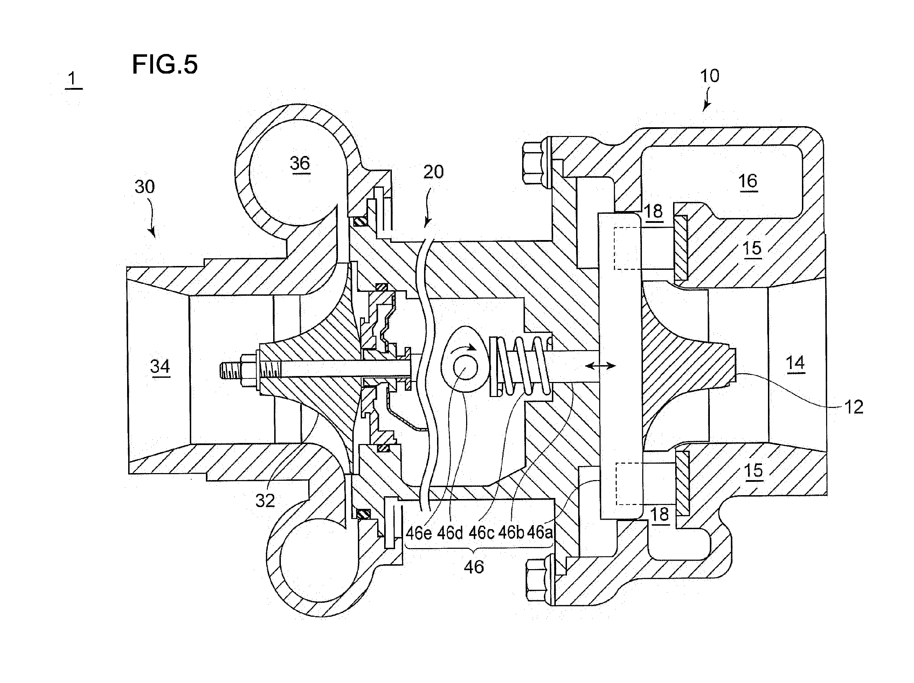

Fig. 5 is a view illustrating a driving part 46 according to an embodiment. The driving part 46 comprises: an annular back side movable body 46a capable of moving the nozzle wall 44 from the back side of the nozzle wall 44; a rod 46b connected to the back side movable body 46a; a spring 46c for biasing the rod 46b in a direction to move the nozzle wall 44 toward the hub side; a cam 46d disposed so as to touch a head portion of the rod 46b; and a cam shaft 46e connected to the cam 46d. For example, the rod 46b may be disposed on the both sides of the rotating shaft 24.

When the cam shaft 46e is rotated by an actuator (not shown), the nozzle wall 44 moves forward and backward in the axial direction along the profile of the cam 46d. When the nozzle wall 44 moves forward and backward in the axial direction, the nozzle with B defined as the width between the shroud-side flow guide wall 52 and the hub-side flow guide wall 54 in the nozzle part 18 is varied over all circumference of the annular nozzle part 18. The flow of the exhaust gas flowing in the nozzle part 18 can be controlled by the change of the nozzle width B.

According to the above variable geometry exhaust gas turbocharger 1, the nozzle vane 42 is fixed in the nozzle part 18 in a state of being unable to rotate, and only the nozzle wall 44 is movable forward and backward. Thus, the structure of the sliding portion is simplified as compared with a conventional variable geometry mechanism of swing vane type or of slide vane type.

In particular, in a conventional case where a nozzle vane itself is swung or slid, the driving mechanism is required to have a high actuation accuracy because the nozzle vane is a member of controlling directly the flow of exhaust gas. In contrast, according to the embodiment, the nozzle vane 42 is fixed in the nozzle part 18, and only the nozzle wall 44 is moved forward and backward, whereby it is possible to manage the actuation accuracy of the driving mechanism less strictly than the conventional type and thereby to reduce cost.

Further, in the above embodiment, the nozzle vane 42 protrudes from the shroud-side flow guide wall 52 toward the nozzle part 18, whereby it is possible to shorten the length of the nozzle vane 42 as compared to the case where the nozzle vane 42 protrudes from the hub side where the recess portion 56 is formed.

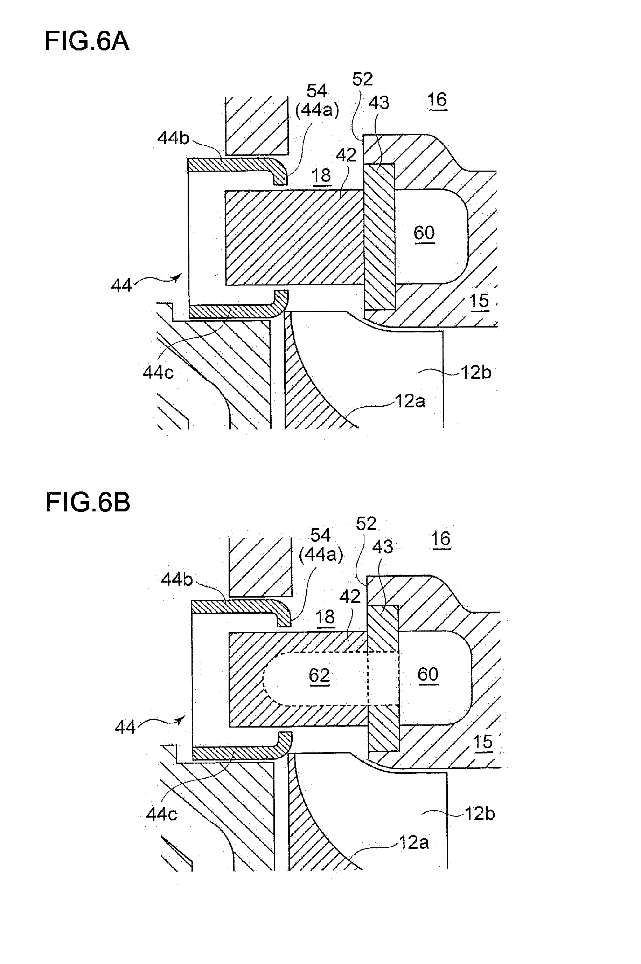

Each of Fig. 6A and Fig. 6B is a view illustrating a cooling structure of a variable geometry mechanism 40 according to an embodiment.

In some embodiments, as shown in Fig. 6A, in the shroud part 15 of the turbine housing 10, an annular cooling passage 60 in which the cooling medium flows is formed.

According to such embodiments, by allowing the cooling medium such as water, oil or air, to flow in the cooling passage 60, it is possible to cool the shroud-side flow guide wall 52 or the nozzle vane 42 protruding from the shroud-side flow guide wall 52. Therefore it is possible, for example, to form the nozzle vane 42 from a typical inexpensive stainless steel without using expensive materials such as heat resistant Ni-based alloy.

In particular, when the cooling passage 60 is formed on the back side of the base end part 43 of the nozzle vane 42, it is possible to obtain a large effect of cooling the nozzle vane 42.

In some embodiments, as shown in Fig. 6B, inside the nozzle vane 42, a cavity portion 62 communicated with the cooling passage 60 is formed. According to such embodiments, it is possible to cool the nozzle vane 42 more effectively.

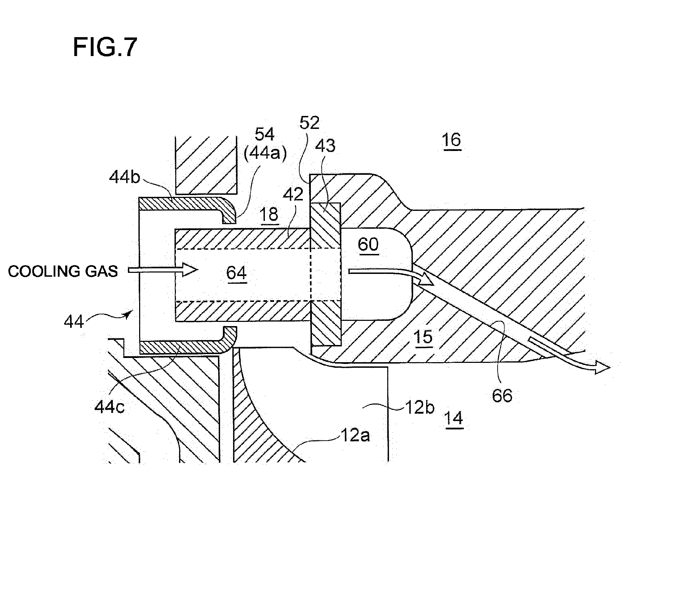

Fig. 7 is a view illustrating a cooling structure of a variable geometry mechanism 40 according to an embodiment.

In some embodiments, as shown in Fig. 7, inside the nozzle vane 42, a through-hole 64 is formed through the nozzle vane 42 in an axial direction of the nozzle vane 42. The through-hole 64 is in communication with the cooling passage 60.

According to such embodiments, it is possible to cool the nozzle vane 42 effectively by the flow of the cooling medium such as air in the through-hole 64.

In some embodiments, in the shroud part 15 of the turbine housing 10, formed is a cooling medium discharging passage 66 for permitting the through-hole 64 of the nozzle vane 42 and an exhaust gas outlet 14 on a downstream side of the turbine wheel 12 to be communicated with each other. At least one cooling medium discharging passage 66 as described above may be formed, or, a plurality of such cooling medium discharging passages 66 may be formed with intervals in the circumferential direction.

According to such embodiments, the cooling medium having flown in the through-hole 64 is discharged via the cooling medium discharging passage 66 to the exhaust gas outlet 14 on the downstream side of the turbine wheel 12, whereby it is possible to continuously supply the cooling medium to the through-hole 64.

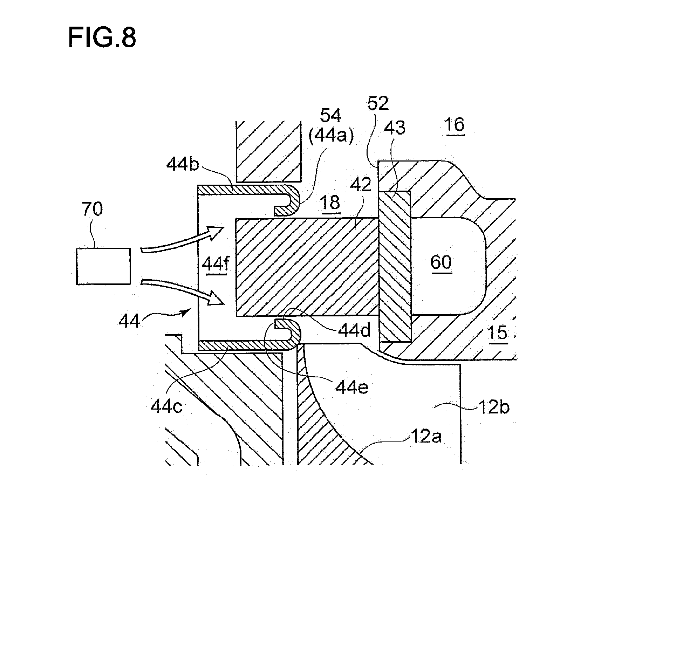

Fig. 8 is a view illustrating a nozzle wall 44 according to an embodiment.

In some embodiments, the variable geometry exhaust gas turbocharger 1 comprises, as shown in Fig. 8, a cooling medium introducing mechanism 70 for introducing the cooling medium into an internal space 44f of the nozzle wall 44 surrounded by the flow guide wall part 44a, the outer circumferential side wall part 44b and the inner circumferential side wall part 44c. The nozzle wall 44 has an annular collar portion 44e provided so as to project from a circumferential edge of the opening 44d toward the internal space 44f.

According to such embodiments, it is possible to introduce the cooling medium into the internal space 44f of the nozzle wall 44 from the cooling medium introducing mechanism 70, whereby it is possible to cool the nozzle wall 44 effectively. In addition, since the nozzle wall 44 has a collar portion 44e provided so as to project from the circumferential edge of the opening 44d toward the hub side, the cooling medium introduced into the internal space 44f is less likely to leak to the nozzle part 18, and it is thereby possible to suppress reduction in the turbine efficiency due to leakage of the cooling medium.

Further, in such embodiments where the through-hole 64 formed inside the nozzle vane 42 as shown in Fig. 7 is employed in combination, the cooling medium introduced into the internal space 44f flows in the through-hole 64, whereby it is possible to cool the nozzle vane 42 at the same time as the nozzle wall 44.

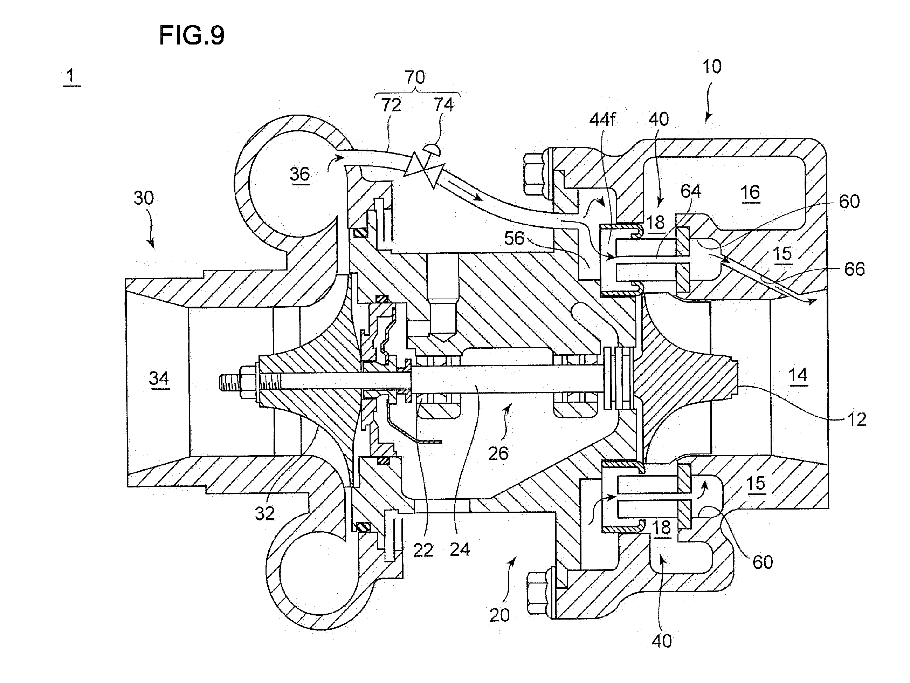

Fig. 9 is a view illustrating a cooling medium introducing mechanism 70 according to an embodiment.

In some embodiments, as shown in Fig. 9, the cooling medium introducing mechanism 70 is configured to introduce, as the cooling medium, air flowing in the compressor housing 30 of the variable geometry exhaust gas turbocharger 1.

That is, the cooling medium introducing mechanism 70 has a cooling medium introducing tube 72 for permitting the compressor scroll part 36 of the compressor housing 30 and the recess portion 56 in which the nozzle wall 44 is accommodated to be communicated with each other, and the air compressed by the compressor impeller 32 can be introduced as the cooling medium into the internal space 44f of the nozzle wall 44.

According to such embodiments, it is possible to use, as the cooling medium, the air flowing in the compressor housing 30 with a simple structure.

In some embodiments, as shown in Fig. 9, the cooling medium introducing mechanism 70 has a control valve 74 as a pressure control device for controlling a pressure of the air to be introduced into the internal space 44f of the nozzle wall 44. The air introduced from the compressor scroll part 36 has a pressure higher than that of the exhaust gas flowing in the nozzle part 18. In view of this, the control valve 74 may be a pressure reducing valve 74.

According to such embodiments, it is possible to control the pressure of the air to be introduced to the internal space 44f of the nozzle wall 44. Accordingly, by controlling the control valve 74 in accordance with the timing of moving the nozzle wall 44 forward and downward to control the pressure of the air to be introduced, it is possible to reduce the driving power for the driving part 46 for moving the nozzle wall 44 forward and backward. As in such embodiment, the variable geometry exhaust gas turbocharger 1 may comprise a controller to control the driving part 46 and the control valve 74 integrally.

Embodiments of the present invention are described in detail above, but the present invention is not limited thereto, and various amendments and modifications may be made without departing from the scope of the invention. Obviously, some of embodiments described above may be combined with each other.

### Industrial Applicability

The variable geometry exhaust gas turbocharger according to at least one embodiment of the present invention is preferably used as a turbocharger for an automobile engine, for example.

### Reference Signs List

- 1: Variable geometry exhaust gas turbocharger
- 10: Turbine housing
- 12: Turbine wheel
- 12a: Hub
- 12b: Rotor blade
- 14: Exhaust gas outlet
- 15: Shroud part
- 16: Turbine scroll part
- 18: Nozzle part
- 20: Bearing housing
- 22: Bearing unit
- 24: Rotating shaft
- 26: Turbine rotor
- 30: Compressor housing
- 32: Compressor impeller
- 34: Intake air inlet
- 36: Compressor scroll part
- 40: Variable geometry mechanism
- 42: Nozzle vane
- 43: Base end part
- 44: Nozzle wall
- 44a: Flow guide wall part
- 44b: Outer circumferential side wall part
- 44c: Inner circumferential side wall part
- 44d: Opening
- 44e: Collar portion
- 44f: Internal space
- 46: Driving part
- 46a: Back side movable body
- 46b: Rod
- 46c: Spring
- 46d: Cam
- 46e: Cam shaft
- 52: Shroud-side flow guide wall
- 54: Hub-side flow guide wall
- 56: Recess portion
- 60: Cooling passage
- 62: Cavity portion
- 64: Through-hole
- 66: Cooling medium discharging passage
- 70: Cooling medium introducing mechanism
- 72: Cooling medium introducing tube
- 74: Control valve

## Claims

1. A variable geometry exhaust gas turbocharger comprising:
a turbine rotor including a rotating shaft and a turbine wheel fixed on an end part of the rotating shaft;
a bearing housing accommodating a bearing unit for rotatably supporting the rotating shaft;
a turbine housing accommodating the turbine wheel rotatably and having formed, around the turbine wheel, an turbine scroll part of an annular shape in which exhaust gas flows; and
a variable geometry mechanism provided in a nozzle part of an annular shape to guide the exhaust gas flowing in the turbine scroll part into the turbine wheel;
wherein the variable geometry mechanism comprises:
a nozzle vane protruding, in a state of being unable to rotate, from at least one of a shroud side or a hub side of the nozzle part toward the nozzle part;
a nozzle wall of an annular shape configured to be movable forward and backward from the hub side toward the shroud side or from the shroud side toward the hub side of the nozzle part, and configured to permit a nozzle width of the nozzle part to be variable over all circumference; and
a driving part for moving the nozzle wall forward and backward.

2. The variable geometry exhaust gas turbocharger according to claim 1,
wherein the nozzle wall comprises:
a flow guide wall part having an annular shape and constituting at least a part of a hub-side flow guide wall defining the nozzle part together with a shroud-side flow guide wall of the turbine housing therebetween;
an outer circumferential side wall part of an annular shape connected to an outer circumferential side of the flow guide wall part; and
an inner circumferential side wall part of an annular shape connected to an inner circumferential side of the flow guide wall part, and
wherein in the flow guide wall part, an opening through which the nozzle vane is insertable, is formed.

3. The variable geometry exhaust gas turbocharger according to claim 2, wherein the nozzle vane protrudes from the shroud-side flow guide wall toward the nozzle part.

4. The variable geometry exhaust gas turbocharger according to claim 3, wherein in a shroud part of the turbine housing, a cooling passage for a cooling medium to flow is formed.

5. The variable geometry exhaust gas turbocharger according to claim 4, wherein inside the nozzle vane, a cavity portion communicated with the cooling passage is formed.

6. The variable geometry exhaust gas turbocharger according to claim 4, wherein inside the nozzle vane, a through-hole is formed through the nozzle vane in an axial direction.

7. The variable geometry exhaust gas turbocharger according to claim 6, wherein in the shroud part of the turbine housing, a cooling medium discharging passage for permitting the through-hole of the nozzle vane and an exhaust gas outlet on a downstream side of the turbine wheel to be communicated with each other, is formed.

8. The variable geometry exhaust gas turbocharger according to any one of claims 2 to 7, comprising a cooling medium introducing mechanism for introducing the cooling medium into an internal space of the nozzle wall surrounded by the flow guide part, the outer circumferential side wall part and the inner circumferential side wall part.

9. The variable geometry exhaust gas turbocharger according to any one of claims 2 to 8, wherein the nozzle wall has a collar portion provided so as to project from a circumferential edge of the opening toward the internal space.

10. The variable geometry exhaust gas turbocharger according to claim 8 or 9, wherein the cooling medium introducing mechanism is configured to introduce, as the cooling medium, air flowing in a compressor housing of the variable geometry exhaust gas turbocharger.

11. The variable geometry exhaust gas turbocharger according to claim 10, wherein the cooling medium introducing mechanism has a pressure control device for controlling a pressure of the air to be introduced into the internal space of the nozzle wall.
